# EUROPÄISCHE PATENTSCHRIFT

(11) **EP 0 466 858 B1**
(45) Veröffentlichungstag und Bekanntmachung des Hinweises auf die Patenterteilung: **23.11.1994**
(21) Anmeldenummer: 91902653.4
(22) Anmeldetag: 29.01.1991
(51) Int. Cl.: G01G 19/22, G01G 11/08

(54) **ANLAGE ZUM KONTINUIERLICHEN MISCHEN UND HOMOGENISIEREN**
CONTINUOUS MIXING AND HOMOGENIZATION UNIT
INSTALLATION DE MELANGE ET D'HOMOGENEISATION EN CONTINU

(30) Priorität: 02.02.1990 CH 349/90
(43) Veröffentlichungstag der Anmeldung: 22.01.1992
(73) Patentinhaber: Bühler AG, 9240 Uzwil (CH)
(72) Erfinder: WEIBEL, Roman, CH-9242 Oberuzwil (CH); GMÜR, Bruno, CH-9014 St. Gallen (CH); NÄF, Peter, CH-9410 Heiden (CH)
(74) Vertreter: von Samson-Himmelstjerna, Friedrich R., Dipl.-Phys.
(86) Internationale Anmeldenummer: CH9100023
(87) Internationale Veröffentlichungsnummer: WO9111690

(56) Entgegenhaltungen:
- EP-A- 0 170 322
- WO-A-86/05874
- DE-A- 2 247 518
- DE-A- 3 219 910
- DE-A- 3 708 282
- FR-A- 2 384 246

## Beschreibung

Die Erfindung befaßt sich mit einer Anlage zum Mischen und Homogenisieren von Mehl und dgl.

Derartige Anlagen sind bekannt.

Zur Mischung und Homogenisierung von schüttfähigen Mahlgütern, insbesondere Rohkomponenten für die Nahrungs- und Futtermittelindustrie wurden früher fast ausnahmslos die sogenannten Chargenmischer eingesetzt. Diese erlauben eine gute Durchmischung und einen hohen Grad an Homogenität bezüglich aller auch kleinsten Rohkomponenten wie zum Beispiel für die Herstellung einer Backmischung. In der Praxis besteht eine grosse Konzeptvielfalt, die je nach Fachgebiet besondere Ausprägungen haben. Als einfachste Lösung wird der Chargenmischer gleichzeitig als Behälterwaage ausgebildet. Die erforderlichen Rohkomponenten werden nacheinander, mittels der Gewichtssignale nach einem vorgegebenen Rezept eingewogen und anschliessend mit den, den ganzen Chargenbehälter erfassenden Mischwerkzeugen, homogenisiert. Die Homogenität ist hier durch geeignete Ausbildung der Mischwerkzeuge und einer optimalen Zeitdauer gut beherrschbar. Zwei grundsätzliche Nachteile ergeben sich aber bei dieser Lösung. Es bildet sich erstens durch streng getrennte Arbeitsabläufe ein unstetiger Betrieb:
- Eindosieren - Wägen
- Mischen - Homogenisieren
- Austragen

Zweitens bestimmt das Volumen des Chargenmischers, zum Beispiel ein bis zwei Kubikemter und die erforderliche Zeit für einen Misch- und Homogenisierzyklus, die Menge, die pro Stunde gemischt werden kann. Leistungssteigerungen sind dadurch enge Grenzen gesetzt.

Auf verschiedene Weise wurde versucht, diese Nachteile zu reduzieren, indem zum Beispiel zumindest ein Teil der Rohkomponenten mittels Dosierwaagen gleichzeitig zugegeben wird. Eine echte Leistungssteigerung kann dadurch erreicht werden, indem eine Vorbehälterwaage verwendet wird, in der während dem Homogenisierungsvorgang eine neue Mischung komplett nach Rezept vorbereitet und innert weniger Sekunden in den Chargenmischer abgelassen werden kann. Darüberhinaus lässt sich die für die Austragung benötigte Zeit verkürzen, wenn nach dem Chargenmischer ein gleich grosser Nachbehälter angeordnet wird, in den jeweils eine ganze Charge abgelassen wird. Von dem Nachbehälter kann so über Austragelemente ein kontinuierlicher Produktstrom abgegeben werden. Für die kontinuierliche Abgabe eines homogenisierten Produktes mit grosser Stundenleistung muss also ein hoher baulicher Aufwand getrieben werden, da eine gewisse Bauhöhe resp. Gebäudehöhe erforderlich ist, um die drei Behälter untereinander anordnen zu können, damit die Uebergabe des Produktes mit Schwerkraft erfolgen kann. Dürfen nacheinander bearbeitete Produktmischungen nicht kontaminiert werden oder werden sehr hohe Anforderungen an die Hygiene gestellt, so muss periodisch eine anspruchsvolle Reinigung durchgeführt und nach jedem Mischungswechsel müssen eventuell gewisse Reste aus den Behältern entfernt werden.

Um diese Nachteile etwas zu verkleinern, werden in jüngerer Zeit vermehrt kontinuierliche Systeme verwendet. Bekannt sind Lösungen mit Bandwaagen. Eine breitere Marktdurchsetzung dieser Systeme bzw. eine teilweise Verdrängung der Chargenmischer war bis heute nicht möglich. Die Frage der Hygiene konnte nur teilweise verbessert werden. Die Homogenität ist nicht in jedem Fall ebensogut wie bei Chargenmischern, insbesondere aber ist der Investitionsaufwand mit vielen Bandwaagen beachtlich. Wegen den schlechten Fliesseigenschaften von zumindest einem Teil der Komponenten bzw. Mahlgüter können einfache Dosierelemente wie bei Flüssigkeiten oder solche für frei fliessfähiges Korngut nicht benutzt werden.

Aus der EP-A2-170 322 ist bereits eine Pulver-/Granulatmischanlage mit zwei Dosierwaagen und anschließenden Austragseinheiten bekannt, mit denen zwei Komponenten, nämlich ein Eisenpulver und ein Kalziumpulver, in einen Sammeltrichter geschüttet und hierdurch vermischt werden. Der Sammeltrichter mündet in eine sich relativ zu ihm drehende Preßform, in welcher die beiden Komponenten sofort unter hohem Druck verpreßt werden. Die Mündungen der beiden Austragseinrichtungen sind auf gleicher Höhe und in gleichem Abstand vom Sammeltrichter angeordnet.

Die DE-A-37 08 282 (SIEMENS) beschreibt ein Verfahren und eine Vorrichtung zum Dosieren von aus n Einzelkomponenten zusammengesetzten Kabel-Füllmassen, insbesondere für Lichtwellenleiteradern.

Dabei werden die beiden Komponenten nacheinander gewogen, dann gemeinsam in eine Mischeinrichtung eingeführt und schließlich in einem Rührwerk gemischt.

Eine Vorrichtung zum Dosieren und Mischen mehrerer Mischgutkomponenten zur Herstellung von Kunststoffen ist aus der DE-A-2 247 518 bekannt. Bei dieser Vorrichtung werden die Komponenten nacheinander in diskontinuierlich arbeitenden Taktwaagen, etwa Behälterwaagen, verwogen, sodann einem Vormischraum und schließlich einem Nachmischer, etwa einem Wurf-Schleudermischer, zugeführt. Auch bei dieser Dosier/Mischanlage sind die Ausgänge der Taktwaagen ringförmig und auf gleicher Höhe zu einem Sammelpunkt angeordnet.

Die FR-A-2 384 246 (RHONE-POULENC) schließlich beschreibt eine als Differentialwaage arbeitende Dosiervorrichtung mit Wägebehälter und angeflanschter Austragsschnecke, deren Geschwindigkeit zur Erzielung eines kontinuierlichen, dosierten Austrags steuerbar ist. Der Wägebehälter hat einen rohrförmigen, einen sich daran anschließenden trichterförmigen und einen sich wiederum daran anschließenden rohrförmigen Abschnitt, der an einen entsprechenden rohrförmigen Abschnitt der Austragsschnecke angeflanscht ist.

Der Erfindung wurde nun die Aufgabe gestellt, die bekannten Nachteile zu beseitigen, insbesondere das homogenisierte Produkt kontinuierlich abzugeben und auch sehr große Durchsatzleistungen bei hohem Grad der Homogenität bezüglich aller Gutkomponenten zu ermöglichen.

Diese Aufgabe wird durch den Gegenstand des Patentanspruchs 1 gelöst, also durch eine Anlage zum Mischen und Homogenisieren von Mehl und dgl. mit folgenden Merkmalen:
- sie weist mehrere kontinuierlich arbeitende Komponenten-Dosierwaagen auf;
- zumindest eine Komponenten-Dosierwaage ist als Differential-Durchflußregler ausgelegt,
- die hierzu als Rohrwaage mit rohrförmigem Querschnitt und einem mit dem unteren Rohrwaagenteil fest verbundenen Schneckenaustragdosierer ausgebildet ist,
- wobei der Übergang von der aufrecht angeordneten Rohrform in den horizontalen Schneckenaustragdosierer etwa querschnittsgleich ausgestaltet ist;
- sie weist einen Vormisch-Raum zur zeitgleichen kontinuierlichen Zusammenmischung und Längsvermischung der einzelnen Komponenten auf; und
- schließlich einen Homogenisator mit Mischwerkzeugen zur Erzeugung einer Quer- und Längsvermischung.

Erst die neue Erfindung zeigt mit grösserer Klarheit, dass für höchste Ansprüche bezüglich der Rezepttreue mehrerer Gutkomponenten und der Homogenisierung das ganze Arbeitsumfeld, so zum Beispiel auch der Produktweg zum Vormischraum, für das Gesamtergebnis von grosser Bedeutung ist. Es wurde bis heute übersehen, dass neben der Genauigkeit jeder einzelnen Vorrichtung auch das Zusammenspiel nicht nur technisch unter Kontrolle gehalten werden muss, sondern insbesondere auch das zeitliche Zueinanderarbeiten sehr wichtig für ein gutes Endresultat ist.

Besonders die Verwendung von Rohrwaagen mit Rohrschnecken als Austrag im Differential-Durchflussmessprinzip erlaubt ein echtes gleichzeitiges Zuführen auch der schwierig zu dosierenden Rohkomponenten wie zum Beispiel Kleie, Schrot oder hoch fetthaltige Mehle, sodass sowohl beim Start, während dem Betrieb und auch am Ende einer Mischaufgabe keine Störungen und unkontrollierbare Mischströme entstehen, insbesondere dann, wenn alle Komponenten-Dosierwaagen nach obigem Rohrwaagen-Differential-Durchflußmesser Prinzip arbeiten.

Die Verwiegezeit lässt sich mit dem Differential-Durchflussmessprinzip nahezu gegen Null senken, da sie an dem kontinuierlichen Produktfluss erfolgt, dies bei sehr hoher Genauigkeit resp. Waagengenauigkeit. Für die Vereinigung der Produktströme existieren optimale apparative Voraussetzungen-gleichsam wie wenn man für eine Tasse Milchkaffee in einer Hand den Kaffee, in der anderen die Milch, beide gleichzeitig in die Tasse einschenkt. Der rohrförmige Querschnitt einer Rohrwaage ebenso wie die Rohrschnecke gestatten zusätzlich in dem besonders problematischen Waageinnenraum eine Produktdurchströmung in vollem Querschnitt. Dies hat zur Folge, dass im normalen Betrieb das Produkt im wesentlichen alle Innenflächen aktiv bestreicht und somit eine selbstreinigende Wirkung entsteht. An keiner Stelle kann Produkt haften oder liegen bleiben. Es entstehen nahezu keine Reste, die in der Nahrungsmittelverarbeitung ein bekanntes Problem darstellen. Durch entsprechendes Programmieren der gesamten Steuerung kann auch eine jeweilige Totalentleerung aller Elemente nach jedem Produktwechsel vorgesehen werden.

Wie bereits ausgeführt, ist die erfindungsgemäße Ausbildung der Komponenten-Dosierwaagen als Differential-Durchflussregler in Gestalt von Rohrwaagen mit rohrförmigen. Querschnitt und einem Schneckenaustrag für alle schlecht fliessfähigen, zum Beispiel mehl- oder flockenartigen Gutkomponenten von großem Vorteil. Es können aber für das Mischen von Mehl und Griess, das freifliessfähige Griess mit einfach konzipierten Differential-Durchflussreglern mit Schieber oder Klappensteuerung und das Mehl mit einem Differential-Durchflussregler mit Schneckenaustrag zudosiert werden.

In Weiterführung des Erfindungsgedankens können mehrere Komponenten-Dosierwaagen in geometrisch ähnlicher Anordnung direkt auf einen gemeinsamen Sammelpunkt, resp. geometrisch ähnlich zu dem Vormischraum angeordnet werden, sodass von dem Ende des Austrages aller Komponenten-Dosierwaagen und einem gemeinsamen Sammelpunkt etwa gleichgrosse Abstände entstehen. Hierdurch ist eine optimale geometrische Voraussetzung für die Gleichzeitigkeit der Zuspeisung aller Einzelkomponenten gewährleistet, was insbesondere eine bei der kontinuierlichen Homogenisierung von schwierigen Mahlgütern vorhandene Schwachstelle völlig beseitigt.

Bevorzugt münden die Komponenten-Dosierwaagen horizontal in einen Sammeltrichter bzw. Vormischraum, mit direkter Ueberführung des Gutes in einen Homogenisator, sodass die Austragmengen der Rohrschnecken der Komponenten-Dosierwaagen in einem gemeinsamen Sammelpunkt unmittelbar zusammenlaufen. Das Ergebnis kann noch verbessert werden, wenn die bauliche Gestaltung für die Produktübergabe von der Rohrschnecke zum Sammeltrichter so erfolgt, dass nicht ein starker Produktstrom schwächere Produktströme an eine Seite verdrängt, wenn vielmehr sofort eine Zusammenmischung erzeugt wird.

Für viele Mischaufgaben müssen zusätzlich zu der Vermischung von zwei, drei oder mehreren Hauptrohkomponenten, Zusatzstoffe mit sehr minimalen Anteilen eingemischt werden. Dafür können eine oder mehrere Mikrodifferential-Dosierwaagen verwendet werden. Es wird ferner bevorzugt, wenn eine Anzahl Komponenten-Dosierwaagen ringförmig und etwa auf gleicher Höhe zu einem Sammelpunkt angeordnet sind, wobei die Komponenten-Dosierwaagen in einem äusseren Kreisring und gegebenenfalls mehrere Mikrokomponentenwaagen innerhalt des Kreisringes angeordnet werden. Der Vorteil dieser Variante liegt darin, dass die einzelnen Mischanteile unmittelbar vor der Zusammenführung gebildet und diese unmittelbar bzw. nahe vor der Homogenisierung zusammengeführt werden. Die Forderung der Gleichzeitigkeit der Zusammenführung aller Mischkomponenten kann so mitgewährleistet werden. Damit ist eine Grundvoraussetzung erfüllt für höchste Anforderungen an die Rezepttreue, die Mischung und die Homogenität.

Eine weitere, ganz besonders vorteilhafte Ausgestaltung ist dadurch gekennzeichnet, dass Vormischraum und Homogenisator eine Baueinheit bilden, wobei der Homogenisator kontinuierlich arbeitet. Damit konnte einmal mehr gezeigt werden, dass der lange Streit zwischen zwei technischen Lösungswegen häufig nur in einem übertriebenen Beharrungsvermögen beider jeweiligen Verfechter und Hersteller der je reinen Konzepte liegt, und die Uebernahme auch nur eines Ansatzes der anderen Lösung unerwartete Fortschritte bringen kann. Das Mischen von mehreren Komponenten besagt noch nichts über die Gleichmässigkeit der Vermischung aus, dies weder in Bezug auf eine bestimmte Menge, zum Beispiel eine Mustermenge, noch in Bezug auf eine Mischungskonstanz über einen grossen Zeitraum bei kontinuierlicher Mischung. Im müllerischen Mischen wird deshalb die Homogenität bzw. die Homogenisierung zusätzlich verlangt. Wegen der vielen möglichen Störfaktoren wurde bis heute nur dem System des Chargenmischers eine Garantierung einer völligen Homogenität zugetraut, gleichsam in einer Identifizierung der Denkweise einer Person, die an wissenschaftlichen Laborarbeiten gewohnt ist. Man übernahm den kleinen Labormischer in grossem Massstab und bezahlte dafür mit einem diskontinuierlichen aufwendigen Arbeitsvorgang.

Von Vorteil ist eine steuerbare Produktrückführung von dem Austritt des Homogenisators in den Vormischraum, die - zum Beispiel beim Anfahren einer Mischung, bei Störungen oder am Ende - eine wählbare Menge und/oder über eine wählbare Zeit eine Rezirkulation des Mischgutes von Vormischraum - Homogenisator - Vormischraum usw. ermöglicht. Da in einem klassichen Homogenisator das Produkt sich nur vorwärts bewegen kann, entsteht (in Fliessrichtung gesehen) nur eine Quervermischung; nach der Erfindung jedoch zusätzlich eine Längsvermischung.

Besonders vorteilhaft ist es, wenn Vormischraum und Homogenisator eine Baueinheit bilden, und diese als kontinuierlich arbeitender Pneuma-Homogenisator konzipiert wird, welcher ein zentrales Auslassrohr aufweisen kann. Bevorzugt wird im Bodenbereich des zentralen Auslassrohres ein einstellbarer Bodenauslass gebildet, sodass dieser über Rechenmittel und/oder qualitative Sensorikmittel auf der Basis von qualitativen Werten wie Feuchtigkeit, Helligkeit, Protein, Rohfaser usw. steuerbar ist. In Weiterführung des Erfindungsgedankens kann der Homogenisator auch als mechanischer Senkrechtförderer mit Homogenisierelementen ausgebildet werden, also mit einer Ueberhebefunktion und mit einem steuerbaren Rücklauf in den Vormischraum. Bevorzugt wird der Senkrechtförderer über einen steuerbaren Bodenauslass des Vormischraumes angeordnet.

Bei sehr hohen Anforderungen an die Homogenität des Endproduktes können in dem Vormischraum pneumatisch wirkende Mittel oder aber mechanische Mischwerkzeuge angeordnet werden. Dabei sollen dem Senkrechtförderer steuerbare Produktabzugmittel zugeordnet werden, zur Steuerung von Produktabzug und Produktrückführung.

Bei automatisch arbeitenden Anlagen ist es vorteilhaft, an dem Ausgang des Homogenisators ein Mess- und Ueberwachgerät für qualitative Produktparameter anzuordnen. Für besondere Anwendungsfälle, zum Beispiel Futtermischungen, kann anschliessend an den Homogenisator ein Produktmisch- und Verweilzeitdepot für das Produkt angeordnet werden, dem vorzugsweise ein Produktumlaufförderer zugeordnet ist.

Mit der neuen Erfindung können erfolgreich die meisten, teils als schwierig bekannten Produkte behandelt, bzw. zugemischt werden. Je nach Anwendungsfall handelt es sich um verschiedene Qualitäten von Mehlen, Griess, Dunst, Kleie usw. und Zutaten wie Trockenkleber, Farbe, Vitamin C, Calzium, Phosphat, Eipulver, Salz, Backpulver usw. oder für Futtermittel entsprechende Futterkomponenten. Es können aber auch momentane Gewichtssignale für das Zudosieren von Wasser oder andere Flüssigkomponenten genutzt werden.

Die neue Erfindung erlaubt ferner bei besonderen Mischaufgaben, zum Beispiel Mischungen für die Teigwaren- oder die Brotherstellung - da jederzeit Momentanwerte von Durchsatz pro Zeiteinheit von sehr hoher Genauigkeit ermittelt werden - gleichzeitig die Zudosierung von Wasser und Eisuppe oder zum Beispiel Flüssigkeiten direkt zu steuern.

Die Erfindung wird nun anhand einiger Ausführungsbeispiele mit weiteren Einzelheiten erläutert.
- Die Fig. 1: zeigt schematisch eine Uebersicht der neuen kontinuierlichen Misch- und Homogenisieranlage.
- Die Fig. 2: zeigt einen Vormischraum.
- Die Fig. 3: zeigt einen Grundriss für die kreisförmige Anordnung von Komponenten-Dosierwaagen zu dem Vormischraum.
- Die Fig. 4: zeigt eine Ausführungsform mit der zusätzlichen Verwendung eines Produktdepots.
- Die Fig. 5: zeigt einen mechanischen Vormischer-Homogenisator.
- Die Fig. 6: zeigt einen vereinfachten Vormischer-Homogenisator.
- Die Fig. 6a: zeigt dieselbe Ausführung wie in Figur 6, jedoch für höchste Ansprüche an die Homogenität
- Die Fig. 7: zeigt einen Pneuma-Homogenisator.

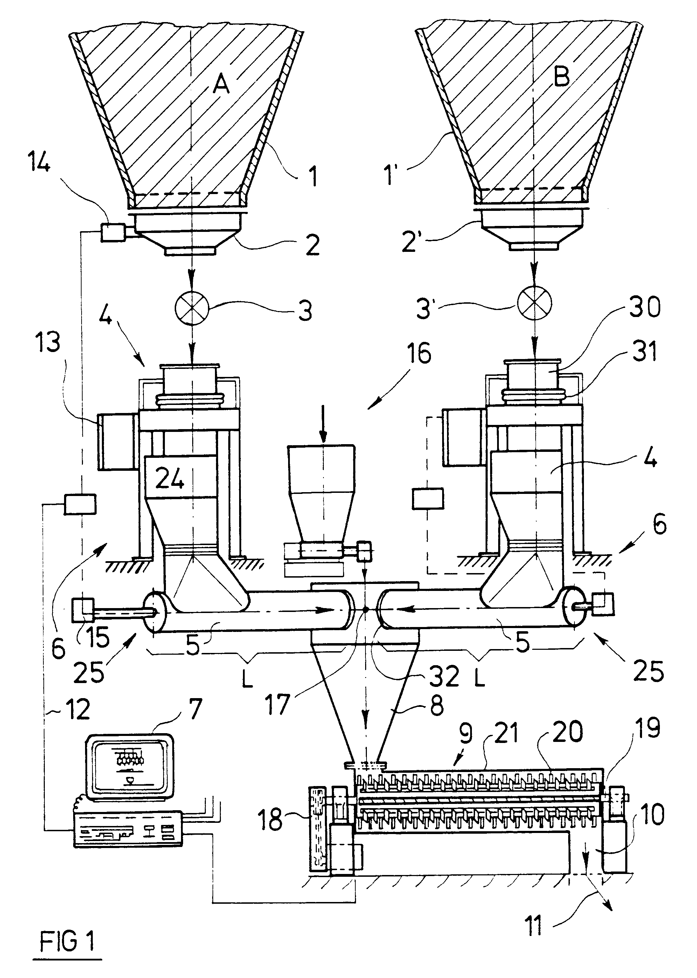

In der Folge wird auf die Figuren 1, 2 und 3 Bezug genommen. Ein Rohmaterial A wird aus einer Komponentenzelle 1 über einen Austragapparat 2 und einer Förderschnecke oder Zellenrad 3 in eine Komponenten-Dosierwaage 4 gespiesen. Die Komponenten-Dosierwaage 4 bildet zusammen mit einer Rohrschnecke 5 einen Differential-Durchflussregler 6. Von einer zweiten Komponentenzelle 1', einem Austragapparat 2' sowie einer Förderschnecke 3' wird ein Rohmaterial B ausgetragen und einer zweiten Komponenten-Dosierwaage 4 bzw. einem entsprechenden Differential-Durchflussregler 6 zudosiert. Von beiden Differential-Durchflussreglern 6 werden zeitgleich die von einer Steuerung 7 vorgegebenen Gewichtsmengen in einen Vormischraum 8 und direkt in einen Homogenisator 9 geleitet und über einen Auslassstutzen 10 der weiteren Behandlung (Pfeil 11) übergeben. Wie in den Figuren 1, 2 und 3 erkennbar ist, sind die Ausgänge 26, 26' usw. der Komponenten-Dosierwaagen 4 mit je gleichem Abstand zu einem Sammelpunkt 17 angeordnet. Der gesamte Produktfluss wird von der Steuerung 7 kontrolliert. Von der Steuerung 7 resp. Mischerrechner 7 werden die entsprechenden Signale an alle entsprechenden Anlageelemente übergeben. Insbesondere erhält jede der Komponenten-Dosierwaagen 4 einen exakten Dosierbefehl über eine Steuerleitung 12. Eine Vorortelektronik 13 gibt die erforderlichen Signale, zum Beispiel an den Speiseapparat 2/3 bzw. 2'/3' und schaltet entsprechend einen Vibrator 14/14' ein, respektiv aus. Ebenso wird je ein weiteres Signal an eine Antriebseinheit 15 der Rohrschnecke 5 gegeben, um für den Start mittels der Drehzahl eine volumetrische Soll-Dosierleistung vorzugeben, welches dann nach Ende der volumetrischen Dosierung durch einen Gewichtswert pro Zeiteinheit mittels der Differentialverwiegung abgelöst und entsprechend nach vorgegebener Mischungszusammenstellung resp. Rezept geregelt wird.

In vielen Anwendungsfällen wird der Mischung zweier oder mehrerer Grundkomponenten, zum Beispiel zwei Mehlsorten, noch eine oder mehrere Zusatzkomponenten, jedoch mit sehr geringem Anteil, beigegeben. Dafür werden spezielle, an sich bekannte Mikrodifferential-Dosierwaagen 16 eingesetzt. Wird nur eine einzige Mikrodifferential-Dosierwaage 16 benötigt, kann diese direkt über den Vormischraum 8 angeordnet werden. Alle beschriebenen Rohkomponenten werden somit auf einen (gedachten) Sammelpunkt 17 zusammengeführt und fliessen direkt in den Homogenisator 9. Der Homogenisator 9 weist einen Antrieb 18 auf, von welchem eine Paddelwelle 19 in verhältnismässig hohe Umlaufgeschwindigkeit gebracht wird, derart, dass von einer grossen Anzahl Paddel 20 innerhalb eines geschlossenen rohrförmigen Gehäuse 21 eine intensive Verwirbelung stattfindet.

Wie in Figur 1 ferner ersichtlich, ist der Differential-Durchflussregler 6 als eine Baueinheit mit einer festen Produktzufuhr 30 über eine flexible Manschette 31, und am Austrittsende der Rohrschnecke 5 ebenfalls über eine Gummimanschette 32 mit dem als Vormischraum ausgestalteten ortsfesten Sammeltrichter 8 verbunden. Die erforderlichen, an sich bekannten Messelemente für die Gewichtswerte bzw. Gewichtswertaufnehmer sind nicht dargestellt.

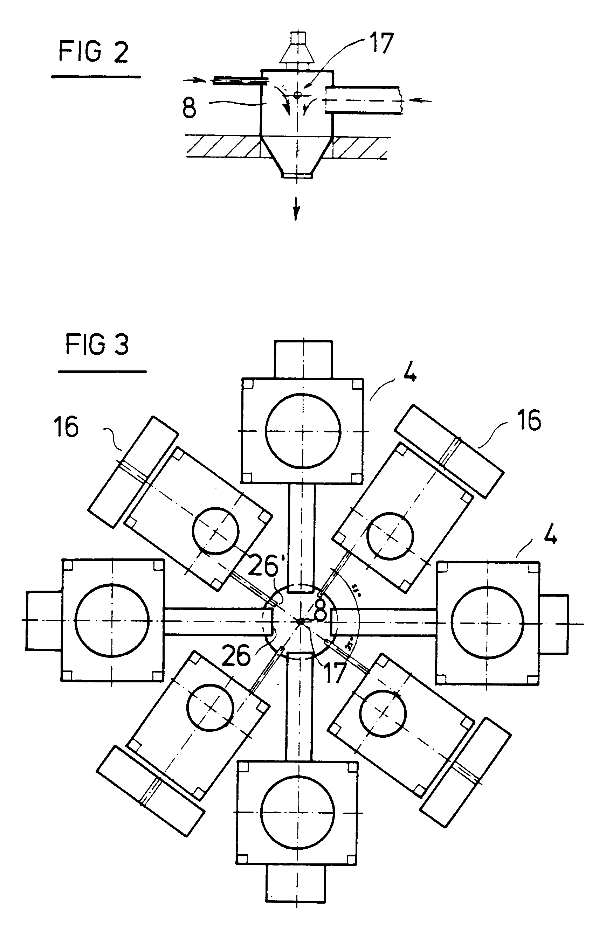

Grundsätzlich arbeitet die Komponenten-Dosierwaage 4 zusammen mit der als Speiseelement dienenden Förderschnecke 3 und der Rohrschnecke 5 sowie den entsprechenden Steuermitteln als Differential-Durchflussregler 6. Hat in der Komponenten-Dosierwaage 4 eine Produktmenge eine wählbare Füllhöhe erreicht, wird über ein entsprechendes Waagensignal die Zuführung von weiterem Produkt über das Speiseelement 3 gestoppt. Zumindest beim Anfahren der Anlage wird nach kurzer Beruhigungszeit in der Waage das wirkliche Gewicht der Produktmenge in dem Waagegefäss 24 festgestellt und der Produktaustrag kann durch Einschalten der Antriebseinheit 15 beginnen. Sind entsprechende Zahlenwerte in der Steuerung 7 gespeichert, so kann durch Vorgabe einer bestimmten Drehzahl der Rohrschnecke 5 die gewünschte Leistung ausgetragen werden. Die dadurch gegebene Dosierleistung ist eine Funktion von Drehzahl und volumetrischem Wirkungsgrad der Rohrschnecke 5. Dies bedeutet, dass die Dosiergenauigkeit bedingt durch die volumetrische Dosierung weniger gut ist als diejenige der Differentialgewichtsmessung. Schon bei kleinen Austragmengen wird in der Komponenten-Dosierwaage 4 eine Gewichtsverminderung festgestellt. Die Gewichtsverminderung pro Zeiteinheit erlaubt das Ueberwechseln in das gravimetrische Bestimmen des ausgetragenen Gutes. Mit dem genaueren gravimetrischen Messwert kann fast ohne Zeitverzug die allenfalls erforderliche Aenderung der Drehzahl der Rohrschnecke 5 über die Antriebseinheit 15 korrigiert werden. Es besteht zwischen dem Austritt 26 (Figur 3) der Rohrschnecke 5 bzw. einem entsprechend zweiten Austritt 26' jeder weiteren Komponenten-Dosierwaage 4 oder 16 im Prinzip ein je gleich grosser Förderweg bis zum Zusammentreffen der einzelnen Teilströme. Nach einem gewissen Dosierzeitabschnitt hat sich in dem Waagegefäss 24 der Inhalt auf eine untere Füllhöhe abgesenkt. Bei diesem als untere Füllmenge angenommenen Wert wird erneut ein Signal zur Betätigung des Speiseelementes 3 gegeben und das Waagegefäss 24 erneut nachgefüllt. Während dem Füllen darf das Gewichtssignal nicht für die Dosierleistung der Rohrschnecke 5 verwendet werden. Es wird aber während der Füllperiode ein entsprechender gespeicherter oder vorgegebener Wert bzw. eine der Dosierleistung zugeordnete Drehzahl aufrechterhalten, bzw. die zuletzt gemessene Drehzahl der Austragschnecke wird konstant gehalten. Die Anlage eignet sich besonders vorzüglich für die Vermischung von mehlartigen Gütern, besonders im Bereich von Mühlen, Futtermühlen, Bäckereien oder zum Beispiel auch die Gutaufbereitung in Teigwarenfabriken, zumindest die Komponenten, die einigermassen fliessfähig sind. Es können aber auch bei entsprechender konstruktiver Gestaltung in dem Bereich des Homogenisators 9 zusätzliche flüssige Komponenten beigemischt werden.

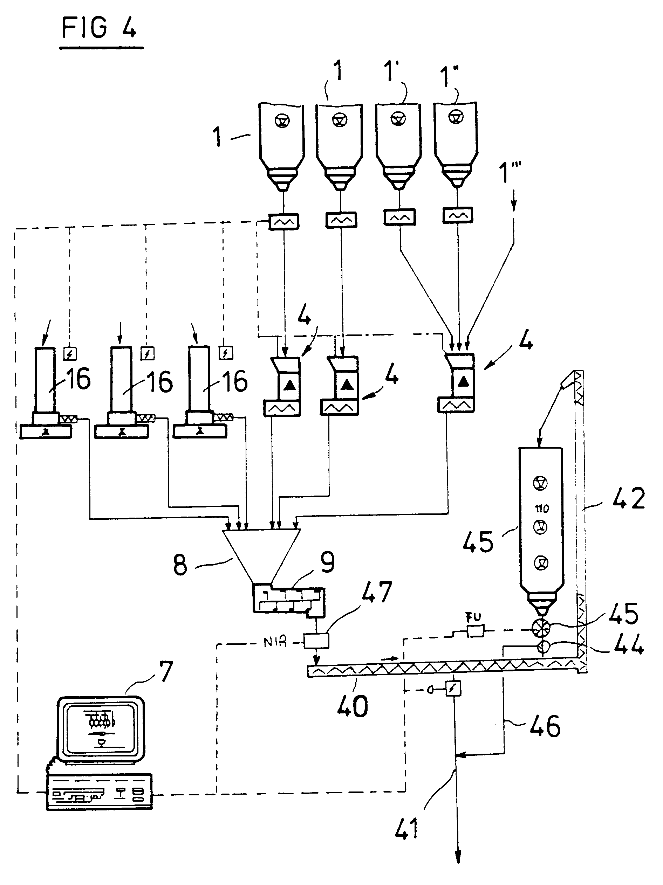

In der Figur 4 ist mehr schematisch eine ähnliche Ausführung wie in der Figur 1 dargestellt. Das Produkt wird in einem Vormischraum 8 und von diesem über die Schwerkraft direkt in einen kontinuierlichen Homogenisator 9 gespiesen. Diese Lösung ist für einfache Mischaufgaben. Entsprechend vereinfacht ist der Homogenisator 9 dargestellt. Am produktaustritt des Homogenisators 9 ist ein NIR-Mess- und Ueberwachgerät 47 angeordnet, danach wird das Gut über eine Horizontalschnecke 40 einer Produktabführleitung 41 zugeführt. Bei dieser Ausgestaltung kann nun der Vorlauf, der ungenügend homogenisiert ist, über eine zweite Vertikalschnecke 42 in ein Produktdepot 43 gegeben werden, von welchem es über eine Dosierschleuse 45 und eine Rohrweiche 44 in kleinste Mengen über ein Zulaufrohr 46 der Produktabführleitung 41 wieder zugeleitet wird. Es ist aber auch möglich, durch mehrfaches Rundlauffördern das Produkt in dem Produktdepot selbst zu homogenisieren, indem es von der Rohrweiche 44 zurück in die Horizontalschnecke 40 und Vertikalschnecke 42 gegeben wird. Alle Ueberwach-, Steuer- und Regelaufgaben können hier, wie in Figur 1, ebenfalls über einen PC resp. Mischer-Rechner 7, erfolgen.

Die Qualität einer Mischung hängt auch beim kontinuierlichen Verfahren von der Homogenität der einzelnen Rohkomponenten ab. Die Figur 4 zeigt deshalb noch eine Möglichkeit für des Homogenisierens verschiedener Rohkomponenten. Mehrere artgleiche Rohkomponenten werden in Gruppen zusammengefasst und mit jeweiligen Anteilen von zum Beispiel 25%, 33% oder 50% auf einen Differential-Durchflussregler gespiesen. Jeder Anteil braucht dabei jedoch nur innerhalb einer Genauigkeit von je +/- 5% zugegeben zu werden. Dies bedeutet, dass unter den entsprechenden Silozellen 1', 1'', 1''' mit artgleichen Rohkomponenten preisgünstige Austragelemente wie zum Beispiel Rotationsschleusen verwendet werden können, mit je vorwählbarer Austragdrehzahl. Der Verschnitt der Gruppe wird jedoch wiederum mit Waagegenauigkeit über Komponenten-Dosierwaage 4 bzw 16' erfasst und sinngemäss zu den anderen Komponenten-Dosierwaagen gesteuert.

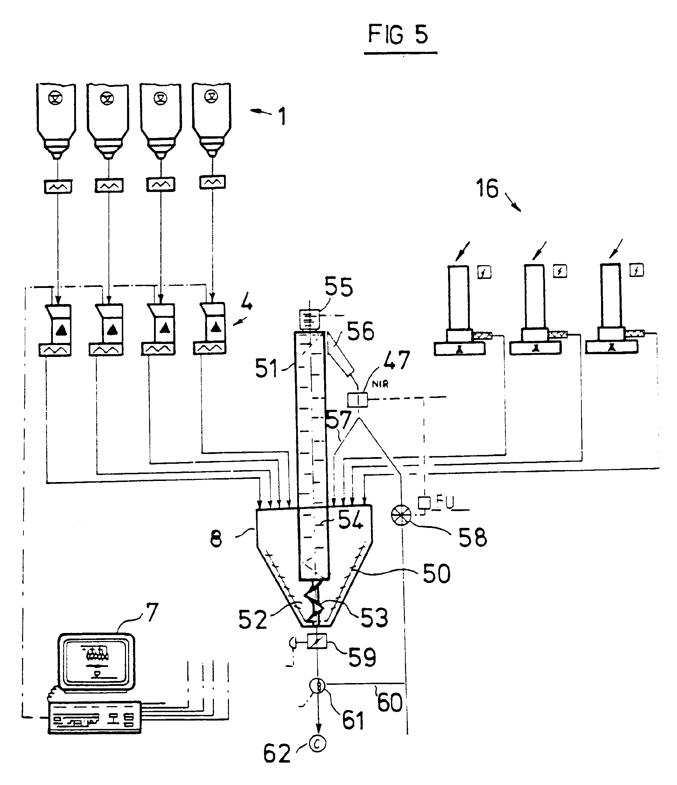

Die Figur 5 zeigt eine ganz besonders vorteilhafte Ausgestaltung, wobei der Vormischraum 8 als eine kombinatorische Einheit mit dem Homogenisator 9 gestaltet ist. In dem Vormischraum 8 sind in der Figur 5 zusätzliche einfache Mischwerkzeuge 50 angeordnet, die eine an sich bekannte Form haben können. Wichtig ist die Tatsache, dass auch hier alle Gutanteile gleichzeitig und mit Waagegenauigkeit in richtiger Zusammensetzung in den Vormischraum 8 eintreten, sodass sofort eine gute Anmischung stattfindet. Die eigentliche Homogenisierung, das heisst die gleichmässige Feinstverteilung aller Komponenten erfolgt in dem mechanischen Wirbelhomogenisator 51. Im Trichterteil 52 befördert eine Einzugsschnecke 53 das eintretende Gut in den mit Homogenisierpaddeln 54 ausgerüsteteten Wirbelhomogenisator 51. Dieser wird von einem im Drehsinn umkehrbaren Antriebsmotor 55 in Drehung versetzt werden. Es können dabei die Mischwerkzeuge 50 von demselben Antrieb in Rotation versetzt werden. Von einem Ueberlauf 56 wird das Gut zuerst über ein NIR-Mess- und Ueberwachgerät 47 geleitet, von wo es entweder über eine Rückführleitung 57 in dem Vormischraum 8 zurückfliesst oder aber über eine Austragschleuse 58 der weiteren Bestimmung zugeführt wird. Für ganz einfache Fälle, also zum Beispiel zwei Mehle zusammenmischen, kann das Mischgut direkt aus dem Vormischraum 8 über eine steuerbare Bodenklappe 59 ausgetragen und über einen Förderer 60 derselben Bestimmung wie von der Austragschleuse 58 übergeben werden. Im umgekehrten Fall können bei besonders hohen Ansprüchen an die Homogenität, Vorlauf und/oder Restmengen ebenfalls über Bodenklappen 59 und Rohrweiche 61 einer Restverarbeitung 62 übergeben werden.

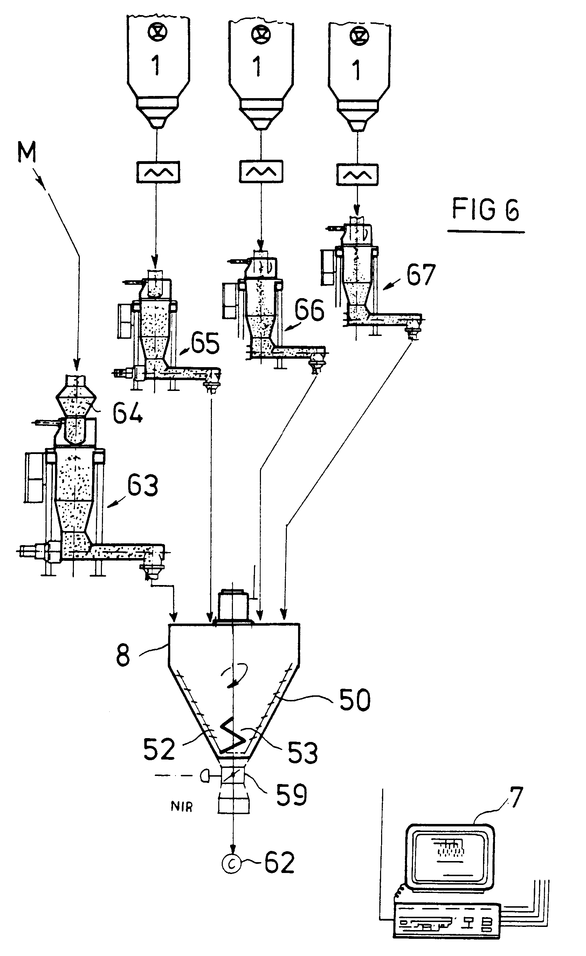

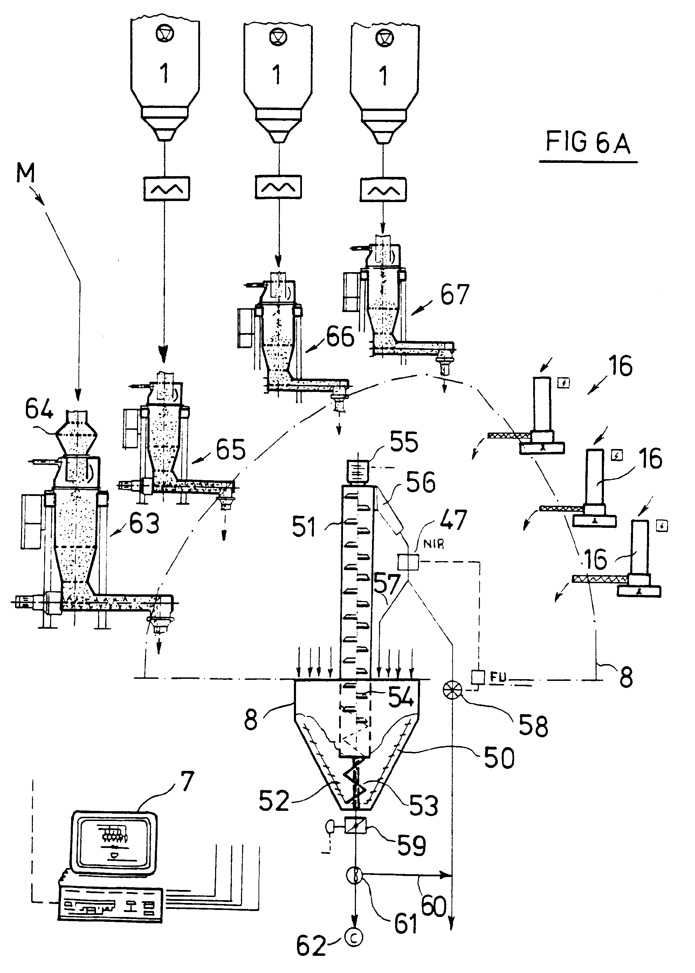

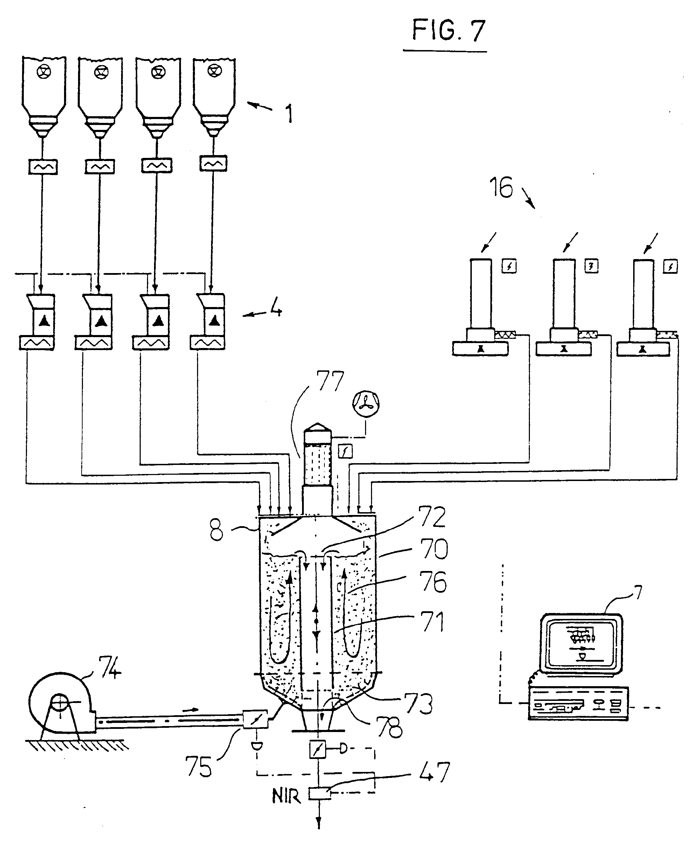

In der Folge wird nun auf die Figur 6 Bezug genommen, welche teils eine vereinfachte Ausführungform der Figur 5 darstellt. Insbesondere ist der Sammeltrichter 8 durch einen einfachen, kombinierten Vormischraum-Homogenisator ausgebildet, in welchem entsprechende Homogenisierwerkzeuge, welche auch ergänzt sein können mit Fluidmitteln (etwa wie in der Figur 7) angeordnet sind. Diese Ausführungsart kann immer dann verwendet werden, wenn zum Beispiel nur verschiedene Mehle vermischt und homogenisiert werden müssen, also wenn keine Kleinstkomponenten zugegeben werden müssen.

Die in der Figur 6 dargestellte Ausgestaltung ist ganz besonders vorteilhaft, indem nun erstmalig die Möglichkeit gegeben ist, das kontinuierlich von der Mühle anfallende Hauptprodukt, zum Beispiel Backmehl oder Teigwarengriess, direkt über eine erste Meisterwaage 63 zu führen. Die Meisterwaage 63 misst den kontinuierlichen Produktstrom M der Mühle und leitet diesen direkt in den Vormischraum 8. Ein kleines Vordepot 64 vor der Differentialwaage übernimmt den Rückstau bei der gravimetrischen Messphase. Alle übrigen Komponenten können nun aufgrund eines vorgegebenen Rezeptes und der momentanen Gewichtssignale der Meisterwaage 63 von je einer abhängigen Dosierwaage 65, 66, 67 usw. über eine sinngemässe Steuerung, ähnlich zu den Figuren 4 und 5, jedoch gewichtsmässig laufend korrigiert, in dem gewünschten prozentualen Anteil zugegeben und homogenisiert werden.

Damit aber ist es erstmals möglich, nach dem an sich kontinuierlichen Arbeitsprozess in der Mühle auch homogene Mehlmischungen im kontinuierlichen Betrieb herzustellen, und zwar ohne entsprechende Zwischenlagerung, was ein grosser Fortschritt ist bei allen Produkten, die in Bezug auf die Produktqualität keine Lagerung brauchen.

Die Figur 6A ist eine weitere Ausgestaltung der Figur 6. Dabei können alle Vorteile, zum Beispiel der Figur 5, ebenso wie der Figur 6, also für höchste Ansprüche bezüglich der Homogenität selbst mit Kleinstkomponenten erfüllt werden. Mit 8' ist eine geometrisch ähnliche Anordnung aller Differentialdosierer zu dem Vormischer 8 symbolisch angedeutet, zum Beispiel entsprechend den Figuren 1 bis 3.

Die Figur 7 ist eine Alternative zu den Figuren 5 und 6. Vormischraum 8 und Homogenisator 9 sind hier zu einem Pneuma-Homogenisator 70 vereinigt. Die Gutzuführuung kann identisch zu der Figur 5 erfolgen. Im normalen Betrieb werden alle Gutanteile in dem Vormischraum 8 eingespiesen und bis auf die Höhe des Ueberlaufes 72 eines Mischrohres 71 eingefüllt. Gleichzeitig wird über einen Doppelboden 73 mit poröser Platte nach innen Luft von einem Gebläse 74 über eine einstellbare Luftdrossel 75 eingeblasen. Dadurch, dass die Einzelkomponenten mehr an der Peripherie eingespiesen werden, das durch Verflüssigung und intensive Verwirbelung homogenisierte Mischgut aber gegen die Mitte (Pfeil 76) abfliesst und ebenfalls die Luft mittig über eine Luftabsaugung 77 abgesaugt wird, kann mit trockener Luft eine ausgezeichnete Homogenität, ganz besonders für Mühlenprodukte, erzielt werden. Der Auslassbereich des Pneuma-Homogenisators 70 wird so ausgeführt, dass zum Beispiel durch Heben und Senken des Mischrohres 71 der Anteil am Bodenauslass 78 steuerbar ist, was insbesondere auch für die Restentleerung benützbar ist.

Die Erfindung erlaubt ferner eine ganze Anzahl weiterer neuartiger Kombinationsmöglichkeiten, wovon nur einige in den Figuren dargestellt sind. Bezüglich der Anordnung werden bevorzugt alle schematisch dargestellten Ausführungen der Figuren 4 bis 7 sinngemäss zu den Figuren 1, 2 und 3 gebaut.

## Patentansprüche

1. Anlage zum Mischen und Homogenisieren von Mehl und dergleichen mit folgenden Merkmalen:
a) sie weist mehrere kontinuierlich arbeitende Komponenten-Dosierwaagen (4; 16) auf;
b) zumindest eine Komponenten-Dosierwaage (4;16) ist als Differential-Durchflußregler (6) ausgelegt,
c) die hierzu als Rohrwaage (4; 16) mit rohrförmigem Querschnitt und einem mit dem unteren Rohrwaagenteil fest verbundenen Schneckenaustragdosierer (5) ausgebildet ist,
d) wobei der Übergang von der aufrecht angeordneten Rohrform in den horizontalen Schneckenaustragdosierer (5) etwa querschnittsgleich ausgestaltet ist;
e) sie weist einen Vormisch-Raum (8) zur zeitgleichen kontinuierlichen Zusammenmischung und Längsvermischung der einzelnen Komponenten auf; und
f) schließlich einen Homogenisator (9) mit Mischwerkzeugen (19, 20) zur Erzeugung einer Quer- und Längsvermischung.

2. Anlage zum Mischen und Homogenisieren nach Patentanspruch 1, dadurch gekennzeichnet, daß je über den Komponenten-Dosierwaagen (4) ein Staubunker mit steuerbarer Bodenklappe angeordnet ist, wobei der Vorbunker 50 % bis 100 % der Komponentenwaage faßt.

3. Anlage zum Mischen und Homogenisieren nach einem der Patentansprüche 1 oder 2,
**dadurch gekennzeichnet**,
dass die Komponenten-Dosierwaagen (4) als Rohrwaagen mit rohrförmigem Querschnitt und einem Schneckenaustrag (25) ausgebildet sind.

4. Anlage zum Mischen und Homogenisieren nach einem der Patentansprüche 1 bis 3,
**dadurch gekennzeichnet,**
dass mehrere Komponenten-Dosierwaagen (4) in geometrisch ähnlicher Anordnung direkt auf einen gemeinsamen Sammelpunkt (17) respektiv geometrisch ähnlich zu dem Vormischraum (8) angeordnet sind, sodass von dem Ende des Austragelementes aller Komponenten-Dosierwaagen (4) und einem gemeinsamen Sammelpunkt (17) etwa gleichgrosse Abstände entstehen.

5. Anlage zum Mischen und Homogenisieren nach einem der Patentansprüche 1 bis 4,
**dadurch gekennzeichnet,**
dass eine Anzahl Komponenten-Dosierwaagen (4) ringförmig und auf gleicher Höhe zu einem Sammelpunkt (17) angeordnet sind und sowohl horizontal wie vertikal den Vormischraum (8) speisen.

6. Anlage zum Mischen und Homogenisieren nach einem der Patentansprüche 1 bis 5,
**dadurch gekennzeichnet**,
dass Vormischraum (8) und Homogenisator (9) eine Baueinheit bilden.

7. Anlage zum Mischen und Homogenisieren nach Patentanspruch 6, **dadurch gekennzeichnet,** dass Vormischraum (8) und Homogenisator (9) als Pneuma-Homogenisator (70) ausgebildet sind.

8. Anlage zum Mischen und Homogenisieren nach Patentanspruch 7, **dadurch gekennzeichnet**, dass der Pneuma-Homogenisator (70) ein zentrales Auslassrohr (71) aufweist.

9. Anlage zum Mischen und Homogenisieren nach Patentanspruch 8, **dadurch gekennzeichnet**, dass im Bodenbereich des zentralen Auslassrohres (71) ein einstellbarer Bodenauslass (78) angeordnet ist.

10. Anlage zum Mischen und Homogenisieren nach einem der patentansprüche 6 bis 9,
**dadurch gekennzeichnet**,
dass der Homogenisator (9) als Senkrechtförderer ausgebildet ist mit einem Rücklauf in dem Vormischraum (8).

11. Anlage zum Mischen und Homogenisieren nach Patentanspruch 10,
**dadurch gekennzeichnet,**
dass der Senkrechtförderer aufrecht über einem steuerbaren Bodenauslass (78) des Vormischraumes (8) angeordnet ist und diesen überragt.

12. Anlage zum Mischen und Homogenisieren nach einem der Patentansprüche 10 oder 11,
**dadurch gekennzeichnet**,
dass in dem Vormischraum (8) mechanische Mischwerkzeuge (50) angeordnet sind.

13. Anlage zum Mischen und Homogenisieren nach einem der Patentansprüche 10 bis 12,
**dadurch gekennzeichnet**,
dass dem Senkrechtförderer steuerbare Produktabzugsmittel (Austragschleuse 58, Bodenklappe 59) zugeordnet sind, zur Steuerung in Produktabzug und Produktrückführung.

## Claims

1. Plant for the mixing and homogenising of flour and the like, with the following features:
a) it has a plurality of continuously operating component dosaging weighers (4; 16);
b) at least one component dosaging weigher (4; 16) is designed as a differential throughflow regulator (6),
c) and for this purpose is constructed as a tubular weigher (4; 16) having a tubular cross-section and with a worm discharge dosager (5) connected securely to the lower tubular weigher part,
d) the transition from the upright-arranged tubular form to the horizontal worm discharge dosager (5) being constructed with substantially identical cross-section;
e) it has a premixing chamber (8) for the simultaneous continuous mixing-together and longitudinal mixing of the individual components; and
f) finally, it has a homogeniser (9) with mixing tools (19, 20) for producing transverse and longitudinal mixing.

2. Plant for mixing and homogenising according to claim 1, characterised in that above each of the component dosaging weighers (4) there is arranged a storage bin with a controllable bottom valve, the preceding bin holding 50 % to 100 % of the component weigher.

3. Plant for mixing and homogenising according to one of claims 1 or 2, characterised in that the component dosaging weighers (4) are constructed as tubular weighers with a tubular cross-section and with a worm discharge device (25).

4. Plant for mixing and homogenising according to one of claims 1 to 3, characterised in that a plurality of component dosaging weighers (4) are arranged in a geometrically similar arrangement directly on to a common collecting point (17) or geometrically similarly to the pre-mixing chamber (8), so that spacings of substantially equal size are formed from the end of the discharge element of all the component dosaging weighers (4) and a common collecting point (17).

5. Plant for mixing and homogenising according to one of claims 1 to 4, characterised in that a plurality of component dosaging weighers (4) are arranged in a ring formation and at the same height with respect to a collecting point (17), and feed the pre-mixing chamber (8) both horizontally and vertically.

6. Plant for mixing and homogenising according to one of claims 1 to 5, characterised in that pre-mixing chamber (8) and homogeniser (9) form one integral unit.

7. Plant for mixing and homogenising according to claim 6, characterised in that pre-mixing chamber (8) and homogeniser (9) are constructed as a pneumatic homogeniser (70).

8. Plant for mixing and homogenising according to claim 7, characterised in that the pneumatic homogeniser (7) has a central outlet pipe (71).

9. Plant for mixing and homogenising according to claim 8, characterised in that an adjustable bottom outlet (78) is arranged in the bottom region of the central outlet pipe (71).

10. Plant for mixing and homogenising according to one of claims 6 to 9, characterised in that the homogeniser (9) is constructed as a vertical conveyor, with a return leading into the pre-mixing chamber (8).

11. Plant for mixing and homogenising according to claim 10, characterised in that the vertical conveyor is arranged upright over a controllable bottom outlet (78) of the pre-mixing chamber (8) and projects beyond the latter.

12. Plant for mixing and homogenising according to one of claims 10 or 11, characterised in that mechanical mixing tools (50) are arranged in the pre-mixing chamber (8).

13. Plant for mixing and homogenising according to one of claim 10 to 12, characterised in that controllable product discharge means (discharge transfer lock 58, bottom valve 59) are associated with the vertical conveyor, for control purposes in product discharge and product return.

## Revendications

1. Installation de mélange et d'homogénéisation de farine et produits analogues, comportant les particularités suivantes :
a) l'installation comporte plusieurs doseuses pondérales d'ingrédient (4 ; 16) fonctionnant d'une manière continue ;
b) au moins une doseuse pondérale d'ingrédient (4 ; 16) est conçue sous la forme d'un régulateur de débit de type différentiel (6),
c) cette doseuse pondérale d'ingrédient (4 , 16) étant, à cet effet, agencée sous la forme d'une peseuse tubulaire (4 ; 16) qui a la section transversale d'un tube et qui est pourvue d'une vis sans fin de dosage et d'extraction (5) fixée à demeure à la partie inférieure de la peseuse tubulaire,
d) la transition de la forme tubulaire à orientation verticale avec la vis sans fin de dosage et d'extraction (5) horizontale offrant un agencement à section transversale pratiquement constante ;
e) l'installation comporte une chambre de prémélange (8) permettant un mélange interne des différents ingrédients et un mélange de ceux-ci dans le sens longitudinal qui sont continus d'une manière constante dans le temps ; et
f) enfin un homogénéisateur (9) comportant des organes de mélange (19, 20) permettant de réaliser un mélange dans le sens transversal et un mélange dans le sens longitudinal.

2. Installation de mélange et d'homogénéisation selon la revendication 1, caractérisée en ce qu'au-dessus de chaque doseuse pondérale d'ingrédient (4), il est disposé une cellule de retenue à fond ouvrant agencé de façon à pouvoir être commandé, le contenu de la cellule d'alimentation correspondant à 50 à 100 % de celui de la doseuse pondérale d'ingrédient.

3. Installation de mélange et d'homogénéisation selon l'une des revendications 1 et 2, caractérisée en ce que les doseuses pondérales à ingrédient (4) sont réalisées sous la forme de peseuses tubulaires qui ont la section transversale d'un tube et comprennent une vis sans fin d'extraction (25).

4. Installation de mélange et d'homogénéisation selon l'une des revendications 1 à 3, caractérisée en ce que plusieurs doseuses pondérales d'ingrédient (4) sont disposées, suivant un agencement géométriquement analogue, directement au-dessus d'un point collecteur commun (17) et d'une manière qui est respectivement géométriquement analogue vis-à-vis de la chambre de prémélange (8), de sorte que des distances pratiquement égales séparent du point collecteur commun (17) les extrémités des éléments d'extraction de toutes les doseuses pondérales d'ingrédient (4).

5. Installation de mélange et d'homogénéisation selon l'une des revendications 1 à 4, caractérisée en ce qu'un certain nombre de doseuses pondérales d'ingrédient (4) sont disposées en anneau et à la même hauteur vis-à-vis d'un point collecteur (17) et alimentent la chambre de prémélange (8) aussi bien horizontalement que verticalement.

6. Installation de mélange et d'homogénéisation selon l'une des revendications 1 à 5, caractérisée en ce que la chambre de prémélange (8) et l'homogénéisateur (9) constituent un bloc structurel unitaire.

7. Installation de mélange et d'homogénéisation selon la revendication 6, caractérisée en ce que la chambre de prémélange (8) et l'homogénéisateur (9) sont agencés de façon à constituer un homogénéisateur pneumatique (70).

8. Installation de mélange et d'homogénéisation selon la revendication 7, caractérisée en ce que l'homogénéisateur pneumatique (70) comporte un tube central d'extraction (71).

9. Installation de mélange et d'homogénéisation selon la revendication 8, caractérisée en ce qu'un fond d'extraction (78) agencé de façon que sa position soit réglable est disposé dans la zone du fond du tube central d'extraction (71).

10. Installation de mélange et d'homogénéisation selon l'une des revendications 6 à 9, caractérisée en ce que l'homogénéisateur (9) est réalisé sous la forme d'un dispositif de transport vertical comportant un retour dans la chambre de pré-mélange (8).

11. Installation de mélange et d'homogénéisation selon la revendication 10, caractérisée en ce que le dispositif de transport vertical est disposé verticalement au-dessus d'un fond d'extraction (78) de la chambre de prémélange (8) qui est agencé de façon que sa position puisse être réglée et en ce qu'il fait saillie vis-à-vis de ce fond d'extraction.

12. Installation de mélange et d'homogénéisation selon l'une des revendications 10 et 11, caractérisée en ce que des organes de mélange (50) de type mécanique sont disposés dans la chambre de prémélange (8).

13. Installation de mélange et d'homogénéisation selon l'une des revendications 10 à 12, caractérisée en ce qu'en vue d'une action de commande de l'extraction de produit et du recyclage de produit, des moyens d'extraction de produit (écluse d'extraction 58, fond ouvrant 59) agencés de façon à pouvoir être commandés sont associés au dispositif de transport vertical.
